# EUROPÄISCHE PATENTSCHRIFT

(11) **EP 0 809 736 B1**
(45) Veröffentlichungstag und Bekanntmachung des Hinweises auf die Patenterteilung: **22.09.1999**
(21) Anmeldenummer: 96902987.5
(22) Anmeldetag: 19.02.1996
(51) Int. Cl.: E02F 3/47, B66C 3/16

(54) **DREHVORRICHTUNG FÜR BAGGERGREIFER**
SLEWING MECHANISM FOR AN EXCAVATOR GRAB
MECANISME VIREUR POUR BENNE PRENEUSE

(30) Priorität: 18.02.1995 DE 19505584
(43) Veröffentlichungstag der Anmeldung: 03.12.1997
(73) Patentinhaber: Heinz Thumm Oelhydraulische Antriebe GmbH, 70736 Fellbach-Oeffingen (DE)
(72) Erfinder: THUMM, Heinz, D-70736 Fellbach (DE)
(74) Vertreter: Manitz, Finsterwald & Partner
(86) Internationale Anmeldenummer: EP9600685
(87) Internationale Veröffentlichungsnummer: WO9626327

(56) Entgegenhaltungen:
- WO-A-90/12162
- DE-A- 2 838 346
- FR-A- 2 357 765
- GB-A- 2 146 918

## Beschreibung

Die Erfindung betrifft eine Vorrichtung für die Drehung eines mit dem Ausleger eines Baggers oder Krans verbundenen Greifers oder dergleichen Werkzeugs gemäß dem Oberbegriff von Anspruch 1.

Eine derartige Vorrichtung ist bereits aus der WO-A-90/12162 bekannt.

Ausgehend hiervon liegt der Erfindung die Aufgabe zugrunde, die bekannte Drehvorrichtung mit hydraulischem Antriebsmechanismus der eingangs angegebenen Art dahingehend zu verbessern, daß die Druckölzufuhr für den Brems- oder Blockiermechanismus mit dem Drucköl des Antriebsmechanismus gekoppelt ist.

Zur Lösung dieser Aufgabe werden die im Kennzeichen des Patentanspruchs 1 angegebenen Merkmale vorgeschlagen. Vorteilhafte Ausgestaltungen und Weiterbildungen der Erfindung ergeben sich aus den abhängigen Ansprüchen.

Die erfindungsgemäße Lösung geht von dem Gedanken aus, daß in einem Freiraum zwischen Stator und Rotor ein Brems- oder Blockiermechanismus vorgesehen ist, der bei abgeschalteter Druckölzufuhr zum Antriebsmechanismus wirksam ist. Vorteilhafterweise ist ein hydraulischer Brems- oder Blockiermechanismus vorgesehen, der mit Drucköl beaufschlagbar und dabei betätigbar oder entgegen einer Federkraft lösbar ist. Um Fehlbedienungen zu vermeiden, ist der Antriebsmechanismus zweckmäßig nur bei abgeschalteter Druckölzufuhr zum Brems- oder Blockiermechanismus mit Drucköl beaufschlagbar. Das gleiche Ergebnis erhält man, wenn gemäß einer alternativen Ausgestaltung der Erfindung der Brems- oder Blockiermechanismus bei eingeschalteter Druckölzufuhr zum Antriebsmechanismus entgegen einer Federkraft lösbar ist. In diesem Falle kann der Brems- oder Blockiermechanismus mit vom Antriebsmechanismus abgezweigtem Drucköl entgegen der Kraft mindestens einer Bremsdruckfeder beaufschlagt werden.

Eine weitere vorteilhafte Ausgestaltung der Erfindung sieht vor, daß ein eingangsseitig mit Drucköl beaufschlagbares Steuerventil vorgesehen ist, das ausgangsseitig wahlweise mit dem Antriebsmechanismus oder mit dem Brems- oder Blockiermechanismus verbindbar ist.

Gemäß einer vorteilhaften Ausgestaltung der Erfindung weist der Brems- oder Blockiermechanismus mindestens einen in einer statorfesten, mit Drucköl beaufschlagbaren Kammer entlang einer axial oder radial ausgerichteten Führungsfläche geführten, im Bereich der Führungsfläche mit einer elastomeren Dichtung gegen Drucköldurchtritt abgedichteten Druckkörper und mindestens einen durch einen Trennspalt zwischen Stator und Rotor hindurch über den Druckkörper gegen eine zur Rotationsachse des Rotors koaxiale Bremsfläche des Rotors anpreßbaren Bremskörper auf. Der Bremskörper kann dabei zusätzlich an einer zur Führungsfläche parallelen Führungsfläche des Stators drehfest geführt werden.

Eine erste Ausführungsvariante der Erfindung sieht hierbei vor, daß der Druckkörper und der Bremskörper als zur Rotationsachse des Rotors konzentrische geschlossene Ringe ausgebildet sind, wobei der Druckkörper in einer zum Trennspalt hin offenen statorseitigen Ringkkammer axial geführt ist und der Bremskörper an einer statorseitigen Führungsfläche drehfest axial geführt ist. Zur Entlastung des Lagers und zur Vergrößerung der Bremsfläche ist es von Vorteil, wenn der Bremskörper und der Rotor einander zugewandte, zueinander komplementäre, zur Rotationsachse des Rotors konzentrische konische Bremsflächen aufweisen. Bei der genannten Ausführungsvariante ist die Dichtung zweckmäßig als den Druckkörper innerhalb der Ringkammer auf der dem Bremskörper gegenüberliegenden Seite übergreifende, vorzugsweise als O-Ring ausgebildete Ringdichtung ausgebildet.

In konstruktiver Hinsicht und im Hinblick auf eine einfache Montage hat es sich als vorteilhaft erwiesen, wenn die statorseitige Führungsfläche des Bremsrings gegenüber der Ringkammer radial nach innen versetzt am Stator angeordnet ist und wenn der Bremsring einen statorseitig in die Führungsfläche axial eingreifenden Ringschaft und einen rotorseitig axial und radial über den Ringschaft überstehenden, die Ringkammeröffnung und den Druckkörper übergreifenden und die vorzugsweise konische Bremsfläche tragenden Bremsbund aufweist. Der bremsringseitige Ringschaft und die statorseitige Führungsfläche weisen dabei zweckmäßig zueinander komplementäre Umfangsprofile auf, die beispielsweise als Vielkeilprofile, Wellenprofile oder Polygonprofile ausgebildet sein können.

Eine weitere Ausführungsvariante der Erfindung sieht vor, daß mehrere in Umfangsrichtung segmentartig verteilt angeordnete Druck- und/oder Bremskörper vorgesehen sind, wobei die einander zugeordneten Druckkörper und Bremskörper unter Bildung eines einheitlichen Druck-/Bremskörpers einstückig miteinander verbunden sein können. Um die Reaktionskräfte beim Brems- und Blockiervorgang in Umfangsrichtung aufnehmen zu können, sind hierbei die Druckkörper oder die Druck-/Bremskörper in je einer in Umfangsrichtung durch Widerlagerflächen bearenzten, mit Drucköl beaufschlagbaren Kammer angeordnet, wobei die Druckkörper bzw. Druck-/Bremskörper einerseits und die statorfesten Kammern andererseits zueinander komplementäre, vorzugsweise sichelförmige oder kreisförmige Umrisse aufweisen können. Auch die Dichtung kann in diesem Fall als an den Kammerumriß angepaßte Formdichtung ausgebildet sein. Abweichend hiervon kann der Druckkörper einen statorseitigen, zusammen mit der benachbarten Kammerbegrenzungsfläche eine Ringnut zur Aufnahme eines vorzugsweise als O-Ring ausgebildeten Dichtrings begrenzenden Ansatz aufweisen.

Zur Verbesserung des internen Kräfteausgleichs und zur Reduzierung der vom Lager aufzunehmenden Kräfte beim Bremsvorgang weisen die Bremskörper mindestens eine rotorseitige, in mindestens eine komplementäre, zur Rotationsachse des Rotors koaxiale Keilrille eingreifende Keilspitze auf. Wenn der Bremskörper nur eine Keilspitze aufweist, sollten seine beiden Keilflanken gegen entsprechende Flanken der Keilrille anliegen, während bei mehreren axial ausgerichteten Keilspitzen am Bremskörper mindestens eine radial äußere und mindestens eine radial innere Keilflanke gegen die komplementäre Keilrillenflanke anliegen sollte.

Eine weitere vorteilhafte Ausgestaltung sieht vor, daß mindestens zwei in Umfangsrichtung verteilt angeordnete, radial offene statorseitige Kammern zur Aufnahme je eines radial betätigbaren Druckkörpers oder Druck-/ Bremskörpers vorgesehen sind. Der Rotor weist hierbei zweckmäßig eine radial nach innen in Richtung Stator offene, vorzugsweise als Keilrille ausgebildete umlaufende Bremsfläche auf und kann zur Montageerleichterung im Bereich der Bremsfläche axial geteilt sein.

Zur Verschleißminderung und zur Verbesserung des Bremsverhaltens trägt die rotorseitige und/oder bremskörperseitige Bremsfläche zweckmäßig einen abriebfesten Bremsbelag.

Zur Erzielung einer kompakten und montagefreundlichen Bauweise wird gemäß einer vorteilhaften Ausgestaltung der Erfindung vorgeschlagen, daß der den Bremskörper aufnehmende Freiraum mit einem den Antriebsmechanismus aufnehmenden Freiraum ohne Zwischenschaltung von Dichtungen oder anderen Bauelementen kommuniziert.

Eine bevorzugte Ausgestaltung der Erfindung sieht vor, daß der Brems- und Blockiermechanismus als Lamellenbremse ausgebildet ist, die eine Mehrzahl von ringförmigen, an ihren Breitseitenflächen einander axial zugewandten, abwechselnd mit dem Stator und dem Rotor drehfest verbundenen axial verschiebbaren und dabei je nach Verschieberichtung gegeneinander anpreßbaren oder voneinander abhebbaren Bremslamellen aufweist. Die Bremslamellen sind dabei zweckmäßig unter der Einwirkung eines axial verschiebbaren Druckkörpers gegen eine axial starre Widerlagerfläche verschiebbar. Der Druckkörper ist hierzu zweckmäßig in Anpreßrichtung durch vorgespannte Bremsdruckfedern und in Abheberichtung mit Drucköl beaufschlagbar, wobei das Drucköl vorteilhafterweise vom Antriebsmechanismus abgezweigt wird. Zur Erhöhung der Bremskraft und zur Verschleißminderung können die Bremslamellen an ihren Breitseitenflächen mit einem Bremsbelag versehen werden.

Eine bevorzugte Ausgestaltung der Erfindung sieht vor, daß der Druckkörper und die Widerlagerfläche drehfest mit dem Rotor verbunden sind und daß der Brems- und Blockiermechanismus radial außerhalb des Antriebsmechanismus und der Drehlager angeordnet ist.

Der Antriebsmechanismus kann beispielsweise als hydraulischer Axial- oder Radialkolbenmotor ausgebildet sein. Grundsätzlich ist es möglich, auch einen als hydraulischen Drehflügelmotor oder als hydraulischen Innenzahnradmotor oder Innengerotor ausgebildeteten Antriebmechanismus zu verwenden.

Im folgenden wird die Erfindung anhand einiger in der Zeichnung in schematischer Weise dargestellter Ausführungsbeispiele näher erläutert. Es zeigen
- Fig. 1a: einen senkrechten Schnitt durch eine Drehvorrichtung mit hydraulischem Axialkolbenmotor und Bremsmechanismus mit axial betätigbarem ringförmigem Bremskörper;
- Fig. 1b: einen Horizontalschnitt durch die Bremsvorrichtung nach Fig. 1a;
- Fig. 1c: einen Schnitt durch den ringförmigen Bremskörper nach Fig. 1a und b;
- Fig. 2a: eine Draufsicht auf den Stator einer Drehvorrichtung mit abgewandeltem Bremsmechanismus;
- Fig. 2b: einen senkrechten Radialschnitt durch ein Bremssegment einer Drehvorrichtung nach Fig. 2a;
- Fig. 3a: eine Darstellung entsprechend Fig. 2a für einen abgewandelten Bremsmechanismus mit im Umriß kreisförmigen Bremssegmenten;
- Fig. 3b: einen senkrechten Radialschnitt durch ein Bremssegment einer Drehvorrichtung nach Fig. 3a;
- Fig. 4a: einen senkrechten Schnitt durch eine Drehvorrichtung mit Axialkolbenantrieb und radial wirkenden Bremssegmenten;
- Fig. 4b: einen Horizontalschnitt durch die Drehvorrichtung nach Fig. 4a im Bereich der Bremssegmente;
- Fig. 5a und b: zwei senkrechte Schnitte und einen Horizontalschnitt durch ein abgewandeltes Ausführungsbeispiel einer Drehvorrichtung mit Lamellenbremse.

Die in der Zeichnung dargestellten Drehvorrichtungen sind für Baggergreifer bestimmt, an denen hohe Zug-, Druck- und Momentenbelastungen auftreten. Sie bestehen im wesentlichen aus einem mit einem nicht gezeigten Baggerausleger verbindbaren Stator 1, einem mit dem Stator über eine Lageranordnung 4 verbundenen Rotor 6, an dem ein nicht gezeigter Baggergreifer befestigbar ist, sowie je einem zwischen Stator 1 und Rotor 6 wirkenden Antriebsmechanismus 8 und Brems- oder Blockiermechanismus 9.

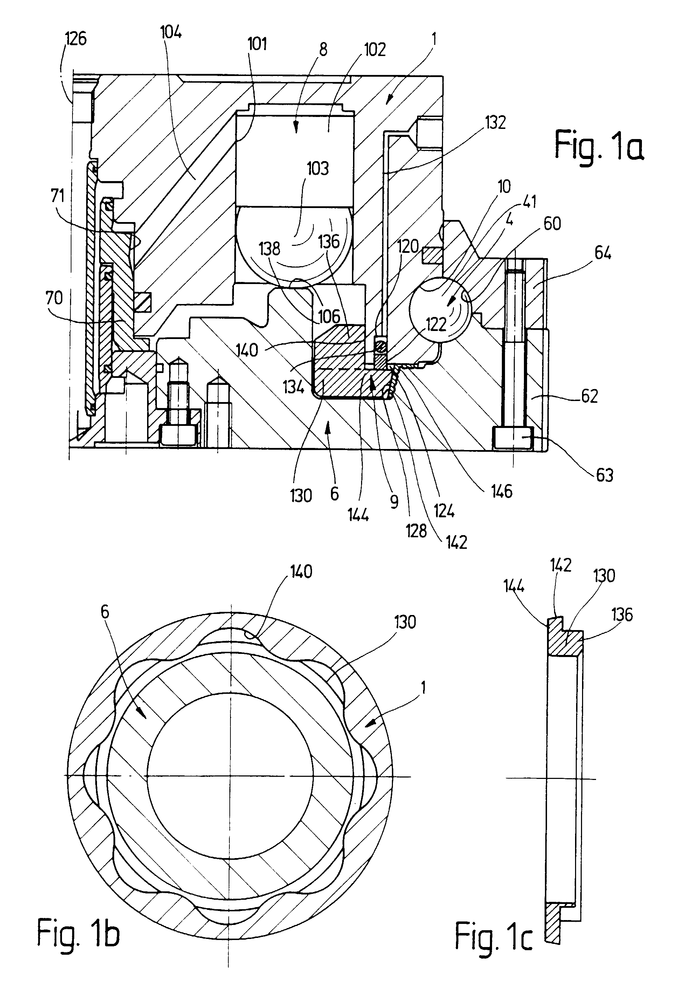

Die Lageranordnung 4 ist bei den in Fig. 1 bis 4 gezeigten Ausführungsbeispielen als Vierpunktlager ausgebildet, das sowohl Axial- als auch Radial- und Momentenbelastungen aufnimmt und das eine besonders kompakte Bauweise der Drehvorrichtung gewährleistet. Die Laufflächen 10,60 des Vierpunktlagers 4 sind unmittelbar in das Statormaterial und das Rotormaterial so einander zugewandt eingeformt, daß ein axialsymmetrischer Ringraum für die Wälzlagerkörper 41 gebildet wird. Die äußere Lauffläche 60 des Vierpunktlagers 4 ist dabei zweiteilig ausgebildet. Wie insbesondere aus Fig. la und 4a zu ersehen ist, ist die eine Hälfte der außen liegenden Lauffläche 60 unmittelbar in das Material des Rotorteils 62 eingeformt, während die andere Hälfte in ein mit mehreren Schrauben 63 an dem Rotorteil 62 befestigbaren Ringstück 64 eingeformt ist.

Die Wälzlagerkörper 41 können durch eine Ringöffnung in den Ringraum der Lageranordnung 4 eingeführt werden, die beim Abnehmen des Ringstücks 64 frei wird. Vor allem für höhere Drehgeschwindigkeiten ist es zur Herabsetzung der Lagerreibung zweckmäßig, zwischen den kugelförmigen Wälzlagerkörpern 41 nicht gezeigte Abstandshalter oder Abstandskäfige anzuordnen.

Die in Fig. la, 4a und 5a gezeigten Ausführungsbeispiele enthalten einen als Axialkolbenantrieb ausgebildeten Antriebsmechanismus 8, der eine Mehrzahl von auf einem Inkreis des Stators 1 in gleichen Abständen voneinander angeorndete axiale Druckzylinder 101 aufweist, in denen je ein Kolben 102 sowie eine gegen die Stirnfläche des Kolbens 102 anliegende, durch eine Zylinderöffnung mehr oder weniger weit hindurchgreifende Kugel 103 angeordnet sind. Auf ihrer Rückseite werden die Kolben 102 mit Hydraulikflüssigkeit beaufschlagt, die über Hydraulikkanäle 104 in die Druckzylinder eintritt. Die Kugeln 103 liegen mit ihrem aus der Zylinderöffnung herausstehenden Teil gegen die entlang einem Inkreis des Rotors 6 verlaufende wellenförmige Kurvenbahn 106 mit axialen Auslenkungen an. Die Kurvenbahn bestimmt zu jedem Zeitpunkt den Hub der Kolben 102.

Wird eine Kugel 103 über den zugehörigen Kolben 102 mit Hilfe der Hydraulikflüssigkeit mit einer bestimmten axialen Kraft gegen den Rotor 1 gedrückt, so übt sie je nach Größe und Richtung der Steigung der Kurvenbahn 106 an der betreffenden Anlagestelle ein mehr oder weniger großes Drehmoment in der einen oder anderen Drehrichtung auf den Rotor 6 aus. Um den Rotor in Drehbewegung versetzen zu können, müssen die Kugeln 103 über die Kurvenbahn 106 ein gleichgerichtetes Drehmoment auf den Rotor 6 übertragen. Es dürfen daher jeweils nur solche Zylinder 101 mit Druck beaufschlagt werden, deren Kugeln 103 gegen eine entgegen der Drehrichtung nach außen weisende Flanke der Kurvenbahn 106 anliegen. Beim Drehen des Rotors 6 bewegen sich die Kugeln unter der Einwirkung des hohen Drucks axial auf der Kurvenbahn 106 nach unten, bis die untere Totpunktlage erreicht ist. Gleichzeitig füllen sich die betreffenden Druckzylinder 101 mit Hydraulikflüssigkeit. Alle diejenigen Druckzylinder 101, deren Kugeln 103 gegen eine entgegen der Drehrichtung nach innen weisende Flanke der Kurvenbahn 106 anliegen, müssen dagegen mit der zum Tank führenden Rückflußleitung verbunden sein, so daß die betreffenden Kugeln 103 nach oben bewegt werden können und die Hydraulikflüssigkeit aus den betreffenden Druckzylindern 101 heraus in die Rückflußleitung verdrängt werden kann. Beim Erreichen des jeweiligen Totpunktes der Hubbewegung wird die bestehende Verbindung des betreffenden Druckzylinders 101 mit der Zu- bzw. Rückflußleitung unterbrochen und beim weiteren Fortschreiten der Bewegung eine Verbindung mit der jeweils anderen Hydraulikleitung hergestellt. Die bezüglich der Kurvenbahn 106 phasengerechte Steuerung der Verbindung der einzelnen Druckzylinder 101 mit der Zu- und Rückflußleitung übernimmt der Verteiler 70, der mit dem Rotor 6 über einen nicht dargestellten Mitnehmerstift drehfest verbunden ist. Die Steuerung erfolgt über die Schlitzkanäle 71, die bei der Drehung des Rotors 6 abwechselnd mit verschiedenen Hydraulikkanälen 104 in Verbindung gebracht werden.

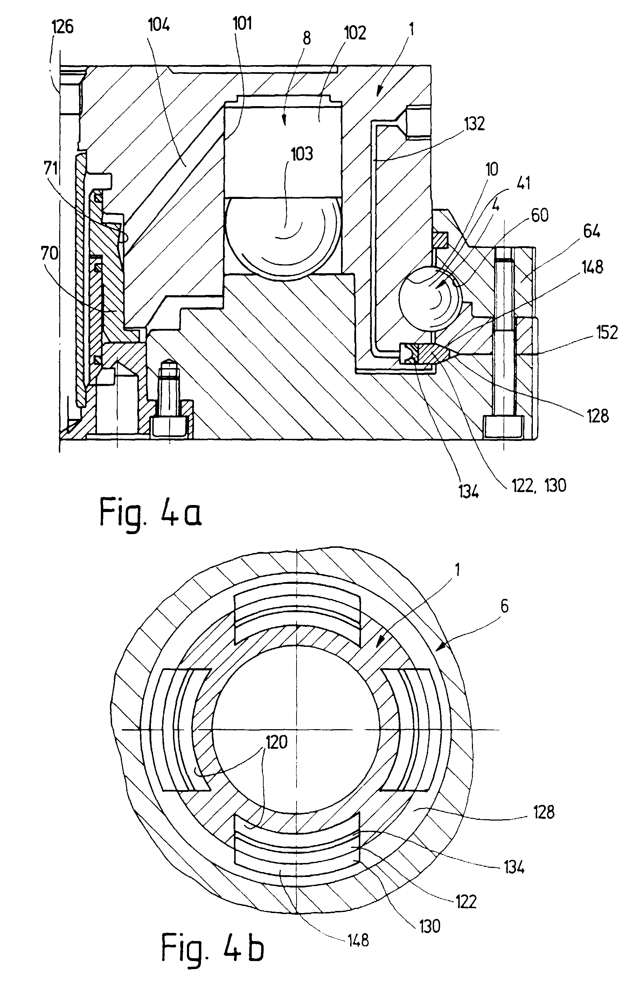

Der in der Zeichnung in verschiedenen Ausführungsvarianten dargestellte Brems- und Blockiermechanismus 9 weist mindestens einen in einer statorfesten Kammer 120 axial (Fig. 1, 2 und 3) oder radial (Fig. 4) geführten Druckkörper 122 und einen durch einen Trennspalt 124 zwischen Stator 1 und Rotor 6 hindurch über den Druckkörper 122 gegen eine zur Rotationsachse 126 des Rotors 6 konzentrische Bremsfläche 128 des Rotors anpreßbaren Bremskörper 130 auf. Die statorfeste Kammer 120 ist über einen Hydraulikkanal 132 von außen her mit Drucköl beaufschlagbar und enthält eine die interne Führungsfläche des Druckkörpers 122 gegen Druckölzutritt abdichtende elastomere Dichtung 134.

Bei dem in Fig. la bis c gezeigten Ausführungsbeispiel ist die statorfeste Kammer 120 als in Richtung Trennspalt 124 offene Ringkammer zur Aufnahme eines ringförmigen Druckkörpers 122 und einer als O-Ring ausgebildeten Dichtung 134 ausgebildet, während der Bremskörpers 130 mit einem Ringschaft 136 in einen mit dem Antriebsmechanismus 8 kommunizierenden Freiraum 138 eingreift und dort an einer statorfesten axialen Führungsfläche 140 mit in Umfangsrichtung verlaufendem Wellenprofil drehfest axial geführt ist (Fig. 1b). Weiter weist der Bremskörper 130 einen rotorseitig axial und radial über den Ringschaft 136 überstehenden, die Ringkammeröffnung mit dem Druckkörper 122 übergreifenden und eine radial nach außen weisende konische Bremsfläche 142 tragenden Bremsbund 144 auf. Die Bremsfläche liegt gegen die komplementäre, ebenfalls konisch ausgebildete rotorseitige Bremsfläche 128 an, die mit einem Bremsbelag 146 aus abriebfestem Kunststoffmaterial beschichtet ist. An den konischen Bremsflächen 142,128 wird die über das Drucköl und den Druckkörper 122 eingebrachte axiale Bremskraft in eine das Lager 4 entlastende, im wesentlichen radial nach außen wirkende Bremskraft umgesetzt.

Die Betätigung des Brems- und Blockiermechanismus 9 erfolgt zweckmäßig bei abgeschaltetem Antriebsmechanismus 8, während der Antriebsmechanismus zweckmäßig bei nicht betätigtem Bremsmechanismus 9 mit Drucköl beaufschlagt wird.

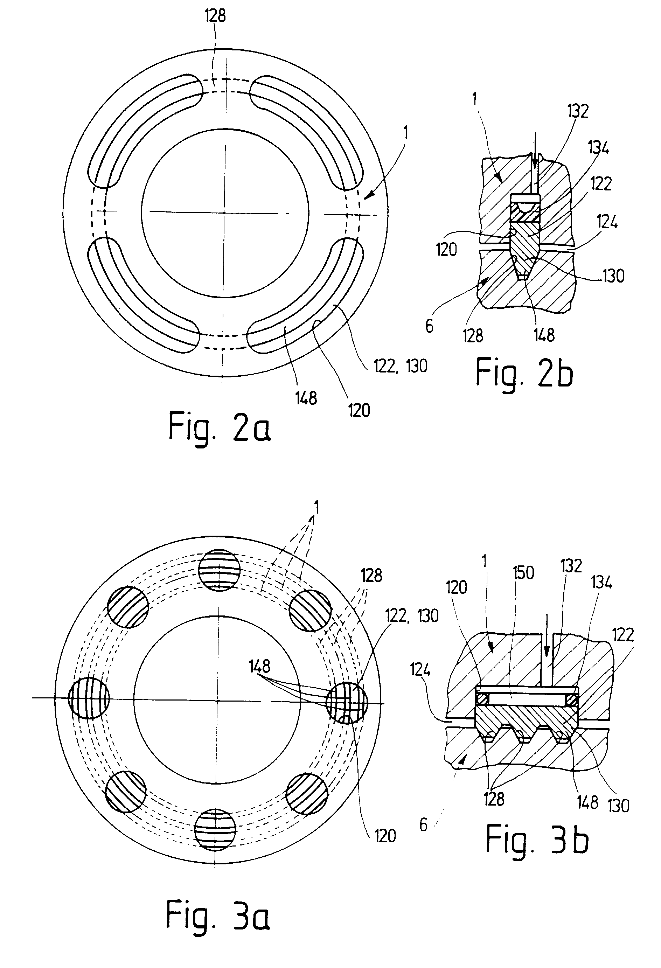

Bei dem in Fig. 2a bis c gezeigten Ausführungsbeispiel besteht der Bremsmechanismus 9 aus vier Segmenten mit je einer nierenförmigen statorfesten Kammer 120 und einem in der Kammer 120 axial geführten, einstückig ausgebildeten kombinierten Druck-/Bremskörper 122,130. Die Druck-/Bremskörper 122,130 sind in ihrer Umrißform an den nierenförmigen Umriß der Kammern 120 angepaßt. Entsprechendes gilt für die in den Kammern 120 angeordneten Formdichtungen 134. Die Druck-/Bremskörper 122/130 durchgreifen den Trennspalt 124 und greifen mit ihrer keilförmigen Spitze 148 in eine koaxial umlaufende, die Bremsfläche 128 bildende rotorseitige Keilrille ein.

Bei dem in Fig. 3a und b gezeigten Ausführungsbeispiel weisen die statorfesten Kammern 120 und die zugehörigen Druck-/Bremskörper 122,130 einen kreisförmigen Umriß auf. Die Druck-/Bremskörper 122,130 weisen an ihrer Rückseite einen zylindrischen Ansatz 150 mit kleinerem Durchmesser auf, dessen Mantelfläche zusammen mit der zylindrischen Kammer 120 einen nach hinten offenen Ringraum zur Aufnahme einer als O-Ring ausgebildeten Dichtung 134 aufweist. Bei dem gezeigten Ausführungsbeispiel weist der Druck-/Bremskörper 122,130 drei Keilspitzen 148 auf, die in drei konzentrisch umlaufende, die Bremsflächen 128 bildende rotorseitige Keilrillen eingreifen.

Das Ausführungsbeispiel nach Fig. 4a und b zeigt einen Bremsmechanismus mit mehreren über den Umfang verteilt angeordneten statorfesten Kammern 120 und in den Kammern 120 radial geführten Druck-/Bremskörpern 122,130. Die Kammern 120 sind zusätzlich mit Formdichtungen 134 bestückt. Die Druck-/Bremskörper 122,130 greifen mit ihren Keilspitzen 148 in eine radial nach innen offene, die Bremsfläche 128 bildende Keilrille des Rotors 6 ein. Aus Montagegründen ist der Rotor 6 im Bereich der Keilringe 128 an einer Trennfläche 152 zweigeteilt.

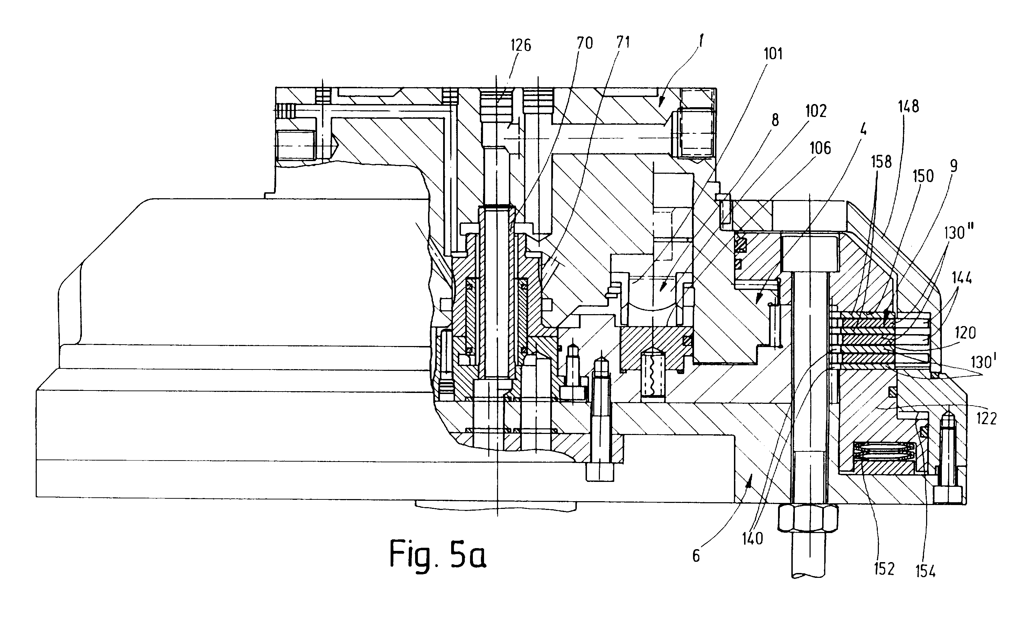

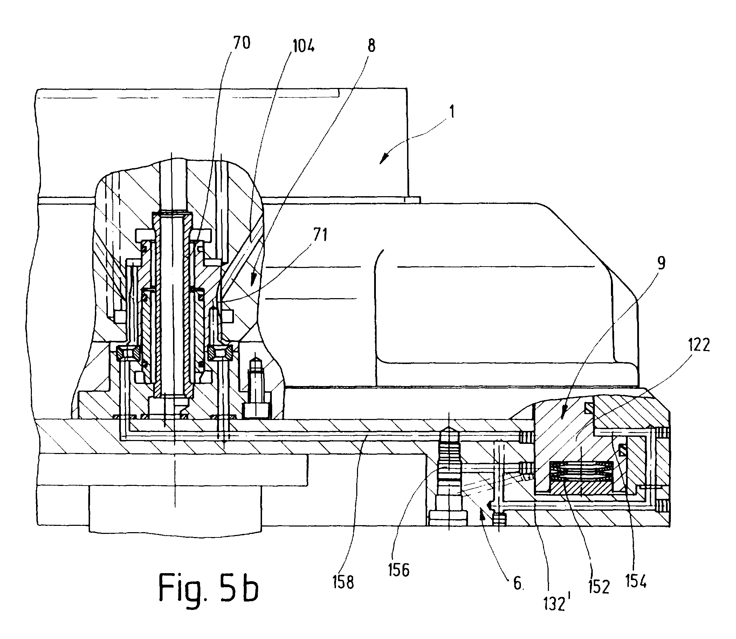

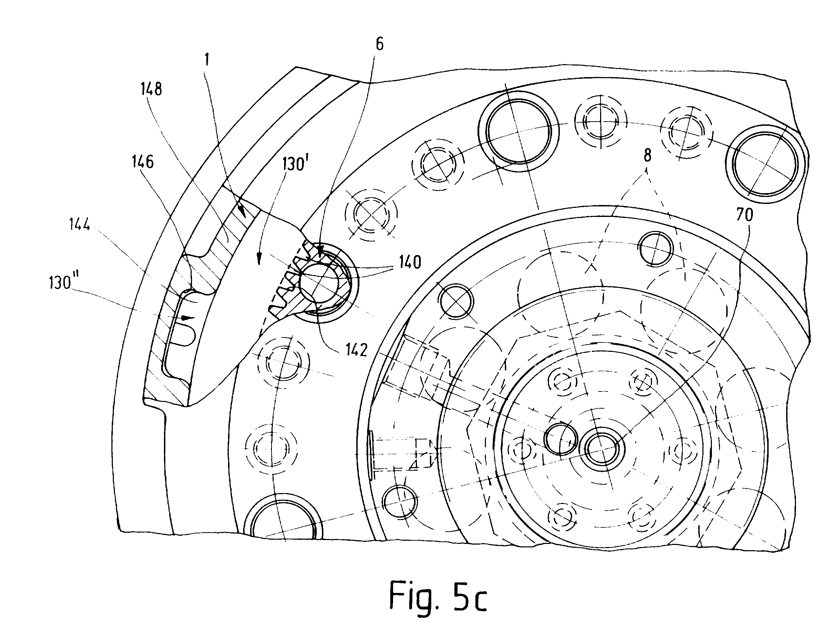

Der in Fig. 5a bis c gezeigte Bremsmechanismus 9 ist als Lamellenbremse ausgebildet, die eine Mehrzahl von ringförmigen, an ihren Breitseitenflächen einander axial zugewandten, abwechselnd mit dem Stator 1 und dem Rotor 6 drehfest verbundenen, axial verschiebbaren Bremslamellen 130', 130" aufweist. Die rotorseitigen Bremslamellen 130' sind innenverzahnt und greifen mit ihren Zähnen 140 in die Zahnnuten 142 einer rotorseitigen Außenverzahnung ein. Die statorseitigen Bremslamellen 130" sind außenverzahnt und greifen mit ihren Zähnen 144 in Zahnnuten 146 eines statorfesten Ringauslegers 148 ein. Die Bremslamellen 130',130" sind unter der Einwirkung eines rotorseitigen, axial verschiebbaren Druckkörpers 122 gegen eine axial starre, rotorseitige Widerlagerfläche 150 verschiebbar und dabei je nach Verschieberichtung gegeneinander anpreßbar oder voneinander abhebbar. Der ringförmige Druckkörper 122 ist in Anpreßrichtung durch in Umfangsrichtung verteilt angeordnete, vorgespannte Druckfedern 152 und in Abheberichtung über den Kanal 132' und einen ringförmigen Druckraum 154 mit Drucköl beaufschlagbar. Wie aus Fig. 5b zu ersehen ist, steht der mit dem Druckraum 154 kommunizierende Kanal 132' über ein Wechselventil 156 mit Kanälen 158 in Verbindung, die über den Verteiler 70 vom Antriebsmechanismus 8 abgezweigt sind. Dadurch wird erreicht, daß bei abgeschalteter Druckölzufuhr zum Antriebsmechanismus auch der Druckraum 154 drucklos ist und die Lamellenbremse 9 unter der Einwirkung der Federpakete 152 blockiert ist. Sobald der Antriebsmechanismus 9 mit Drucköl beaufschlagt wird, wird auch die Druckkammer 154 über das Wechselventil 156 unter Druck gesetzt, so daß der Druckkörper 122 entgegen der Kraft der Federpakete 152 unter Aufhebung der Anpreßkraft zwischen den Bremslamellen axial verschoben wird. Die Anordnung des Bremsmechanismus 9 radial außerhalb des Antriebsmechanismus 8 und der Lageranordnung 4 hat den Vorteil, daß die Bremslamellen im Verschleißfalle leicht zugänglich sind, ohne daß die übrigen Teile des Stators und Rotors auseinandergebaut werden müssen. Ein weiterer Vorteil besteht darin, daß die radial außen angeordneten Lamellen 130',130" an relativ großen, mit Bremsbelägen 158 beschichteten Reibungsflächen gegeneinander anliegen, so daß über die Federpakete 152 hohe Haltekräfte erzielt werden können.

Die Erfindung bezieht sich auf eine Vorrichtung für die Drehung eines mit dem Ausleger eines Baggers oder Krans verbundenen Greifers oder dergleichen Werkzeugs. Sie weist einen mit dem Ausleger verbindbaren Stator 1 und einen mit dem Greifer verbindbaren, am Stator 1 drehbar gelagerten Rotor 6 sowie einen im Inneren zwischen Stator 1 und Rotor 6 angeordneten, von der Statorseite aus mit Drucköl beaufschlagbaren hydraulischen Antriebsmechanismus 8 auf. Um eine richtungsstabile Handhabung des Greifers während der Greiferbetätigung und dem Verschwenken des Auslegers zu gewährleisten, wird gemäß der Erfindung vorgeschlagen, daß in einem Freiraum zwischen Stator 1 und Rotor 6 ein Brems- oder Blockiermechanismus 9 angeordnet ist, der bei abgeschalteter Druckölzufuhr zum Antriebsmechanismus 8 auslösbar ist.

## Patentansprüche

1. Vorrichtung für die Drehung eines mit dem Ausleger eines Baggers oder Krans verbundenen Greifers oder dergleichen Werkzeugs mit einem mit dem Ausleger verbindbaren Stator (1), einem mit dem Greifer verbindbaren, am Stator (1) in einer Radial- und Axialkräfte aufnehmenden Lageranordnung (4) drehbar gelagerten Rotor (6), einem im Inneren zwischen Stator (1) und Rotor (6) angeordneten, von der Statorseite aus mit Drucköl beaufschlagbaren hydraulischen Antriebsmechanismus (8) und mit einem in einem Freiraum zwischen Stator (1) und Rotor (6) angeordneten, bei abgeschalteter Druckölzufuhr zum Antriebsmechanismus (8) wirksamen Brems- oder Blockiermechanismus (9),
dadurch **gekennzeichnet,**
daß der Brems- oder Blockiermechanismus (9) über das Drucköl des Antriebsmechanismus (8) betätigbar ist.

2. Vorrichtung nach Anspruch 1,
dadurch **gekennzeichnet,**
daß der Brems- oder Blockiermechanismus (9) mit vom Antriebsmechanismus (8) abgezweigtem Drucköl entgegen der Kraft mindestens einer Bremsdruckfeder (152) beaufschlagbar ist.

3. Vorrichtung nach Anspruch 1,
dadurch **gekennzeichnet,**
daß ein eingangsseitig mit Drucköl beaufschlagbares Steuerventil vorgesehen ist, das ausgangsseitig wahlweise mit dem Antriebsmechanismus (8) oder mit dem Brems- oder Blockiermechanismus (9) verbindbar ist.

4. Vorrichtung nach einem der vorhergehenden Ansprüche,
dadurch **gekennzeichnet,**
daß der Brems- oder Blockiermechanismus (9) als Lamellenbremse ausgebildet ist, die eine Mehrzahl von ringförmigen, an ihren Breitseitenflächen einander axial zugewandten, abwechselnd mit dem Stator (1) und dem Rotor (6) drehfest verbundenen, axial verschiebbaren und dabei je nach Verschieberichtung gegeneinander anpreßbaren oder voneinander abhebbaren Bremslamellen (130', 130") aufweist.

5. Vorrichtung nach Anspruch 4,
dadurch **gekennzeichnet,**
daß die Bremslamellen (130', 130") unter der Einwirkung eines axial verschiebbaren Druckkörpers (122) gegen eine axial starre Widerlagerfläche (150) verschiebbar sind.

6. Vorrichtung nach Anspruch 5,
dadurch **gekennzeichnet,**
daß der Druckkörper (122) in Anpreßrichtung durch vorgespannte Bremsdruckfedern (152) und in Abheberichtung mit Drucköl beaufschlagbar ist.

7. Vorrichtung nach einem der Ansprüche 4 bis 6,
dadurch **gekennzeichnet,**
daß der Druckkörper (122) und die Widerlagerfläche (150) drehfest mit dem Rotor (6) verbunden sind.

8. Vorrichtung nach einem der Ansprüche 4 bis 7,
dadurch **gekennzeichnet,**
daß die Bremslamellen (130', 130") an ihren Breitseitenflächen einen Bremsbelag (158) tragen.

9. Vorrichtung nach einem der vorhergehenden Ansprüche,
dadurch **gekennzeichnet,**
daß der Brems- und Blockiermechanismus (9) radial außerhalb des Antriebsmechanismus (8) und der Lageranordnung (4) angeordnet ist.

10. Vorrichtung nach einem der vorhergehenden Ansprüche,
dadurch **gekennzeichnet,**
daß der Antriebsmechanismus (9) als hydraulischer Axial- oder Radialkolbenmotor ausgebildet ist.

## Claims

1. Apparatus for the rotation of a grab or like tool connected to the boom of an excavator or crane having a stator (1) connectable to the boom, a rotor (6) connectable to the grab and rotatably journalled at the stator (1) in a bearing arrangement (4), which takes up radial and axial forces, a hydraulic drive mechanism (8) arranged in the interior between the stator (1) and the rotor (6) and pressurisable from the stator side with pressure oil, and a braking or blocking mechanism (9) arranged in a free space between stator (1) and rotor (6) and active when the pressure oil supply to the drive mechanism (8) is switched off, characterized in that the braking or blocking mechanism (9) is actuatable via the pressure oil of the drive mechanism (8).

2. Apparatus in accordance with claim 1, characterized in that the braking or blocking mechanism (9) can be loaded against the force of at least one braking compression spring (152), by pressure oil branched off from the drive mechanism (8).

3. Apparatus in accordance with claim 1, characterized in that a control valve, which can be loaded at the input side with pressure oil, is provided, which is selectively connectable at the output side to the drive mechanism (8) or to the braking or blocking mechanism (9).

4. Apparatus in accordance with one of the preceding claims, characterized in that the braking or blocking mechanism (9) is formed as a lamella brake having a plurality of ring-like braking lamellae (130', 130"), which axially confront one another at their broad side faces, which are alternately rotationally fixedly connected to the stator (1) and to the rotor (6), which are axially displaceable and which can be pressed against one another or lifted from one another depending on the direction of displacement.

5. Apparatus in accordance with claim 4, characterized in that the braking lamellae (130', 130") are displaceable under the action of an axially displaceable pressure member (122) against an axially rigid abutment surface (150).

6. Apparatus in accordance with claim 5, characterized in that the pressure member (122) can be loaded in the pressing direction by pre-stressed brake compression springs (152) and can be loaded in the lifting off direction by pressure oil.

7. Apparatus in accordance with one of the claims 4 to 6, characterized in that the pressure member (122) and the abutment surface (150) are rotationally fixedly connected to the rotor (6).

8. Apparatus in accordance with one of the claims 4 to 7, characterized in that the braking lamellae (130', 130") carry a brake lining (158) at their broad side surfaces).

9. Apparatus in accordance with one of the preceding claims, characterized in that the braking and blocking mechanism (9) is arranged radially outside of the drive mechanism (8) and of the bearing arrangement (4).

10. Apparatus in accordance with one of the preceding claims, characterized in that the drive mechanism (9) is formed as a hydraulic axial or radial piston motor.

## Revendications

1. Dispositif pour la mise en rotation d'un grappin, ou bien d'un outil analogue, relié au bras d'une pelleteuse ou d'une grue, comprenant un stator (1) susceptible d'être relié au bras, un rotor (6) susceptible d'être relié au grappin et monté en rotation sur le stator (1) dans un agencement de palier (4) encaissant des forces radiales et axiales, un mécanisme d'entraînement (8) hydraulique agencé à l'intérieur entre le stator (1) et le rotor (6), alimenté en huile sous pression depuis le côté stator, et un mécanisme de freinage ou de blocage (9) agencé dans un espace libre entre le stator (1) et le rotor (6), agissant lorsque l'alimentation d'huile sous pression vers le mécanisme d'entraînement (8) est coupée,
caractérisé en ce que
le mécanisme de freinage ou de blocage (9) est susceptible d'être actionné au moyen de l'huile sous pression du mécanisme d'entraînement (8).

2. Dispositif selon la revendication 1, caractérisé en ce que le mécanisme de freinage ou de blocage (9) est susceptible d'être alimenté avec de l'huile sous pression dérivée depuis le mécanisme d'entraînement (8), à l'encontre de la force d'au moins un ressort de compression de freinage (152).

3. Dispositif selon la revendication 1, caractérisé en ce qu'il est prévu une soupape de commande susceptible d'être alimentée du côté entrée avec de l'huile sous pression, et susceptible d'être reliée du coté sortie au choix au mécanisme d'entraînement (8), ou au mécanisme de freinage ou de blocage (9).

4. Dispositif selon l'une des revendications précédentes, caractérisé en ce que le mécanisme de freinage ou de blocage (9) est réalisé sous forme de frein à disques, qui comprend une pluralité de disques de freinage annulaires (130', 130") tournés les uns vers les autres dans le sens axial au niveau de leur grande surface latérale, reliés solidairement en rotation alternativement au stator (1) et au rotor (6), susceptibles d'être déplacés axialement et ainsi pressés les uns contre les autres, ou dégagés les uns des autres selon la direction de déplacement.

5. Dispositif selon la revendication 4, caractérisé en ce que les disques de freinage (130', 130") sont déplaçables sous l'action d'un corps de pression (122) déplaçable axialement contre une surface de contrebutée (150) rigide dans le sens axial.

6. Dispositif selon la revendication 5, caractérisé en ce que le corps de compression (122) est attaqué dans la direction de pressage par des ressorts de compression de freinage (152) précontraints, et susceptible d'être alimenté avec de l'huile sous pression dans la direction de soulèvement.

7. Dispositif selon l'une des revendications 4 à 6, caractérisé en ce que le corps de compression (122) et la surface de contrebutée (150) sont reliés solidairement en rotation au rotor (6).

8. Dispositif selon l'une des revendications 4 à 7, caractérisé en ce que les disques de freinage (130', 130") portent une garniture de freinage (158) sur leurs grandes surfaces latérales.

9. Dispositif selon l'une des revendications précédentes, caractérisé en ce que le mécanisme de freinage et de blocage (9) est agencé radialement à l'extérieur du mécanisme d'entraînement (8) et de l'agencement de palier (4).

10. Dispositif selon l'une des revendications précédentes, caractérisé en ce que le mécanisme d'entraînement (9) est réalisé sous forme de moteur hydraulique à pistons axiaux ou radiaux.
